# EUROPEAN PATENT APPLICATION

(11) **EP 2 317 455 A1**
(43) Date of publication of application: **04.05.2011**
(21) Application number: 09174636.2
(22) Date of filing: 30.10.2009
(51) Int. Cl.: G06F 21/02

(54) **System and method for secure serialization**

(71) Applicant: Advanced Digital Broadcast S.A., 1292 Chambesy (CH)
(72) Inventor: Semik, Waldemar, 65-012, Zielona Gora (PL)
(74) Representative: Pawlowski, Adam

(57) **Abstract**

A method for secure serialization of a target device (110) by a serialization server (120), the method comprising the steps of in the serialization server (110), reading device primary identification data from the target device (110), determining serialization data associated with the device primary identification data, generating a target device private key based on the determined device primary identification data, encrypting the serialization data using the target device private key, sending the encrypted serialization data to the target device, whereas in the target device (120), receiving the encrypted serialization data from the serialization server (120), generating a target device public key based on the device primary identification data, decrypting the encrypted serialization data using the target device public key.

## Description

The invention relates to a system and a method for secure serialization.

Electronic devices may have unique identifiers assigned in order to identify the devices, for example during communication or repair circumstances. A process for preparation and storage of unique identifiers related to the electronic device is called serialization.

Electronic devices may have assigned a plurality of unique identifiers, such as a serial number of the device, a MAC address of a network card associated with the device, a ChiplD number associated with a processor of the device, etc. These identifiers may be used by service providers in order to customize services, such as phone call transmission, data services, video streaming etc, to an individual device. For some service types it is important to keep the identifiers secretly within the device, so as not to allow production of uncertified devices with the identifiers copied from certified devices. Examples of sensitive identifiers requiring high level of protection are HDMI (High Definition Multimedia Interface) keys, HDCP (High Bandwidth Digital Content Protection) keys or CA (Conditional Access) keys controlling access to scrambled television video streams. There are known methods to secure the identifiers within the device once the device has been serialized, i.e. device-specific identifiers have been stored in the memory of the device.

However, the current methods of serializing the device, i.e. transmitting the sensitive identifiers from a serialization server to serialized devices, still require improvements so as to increase the security of transmitted data.

For example, in a simple method, wherein a serialization server stores a set of identifiers and transmits them directly to individual devices, the contents of the serialization server are vulnerable to theft and copying to unauthorized devices, either by direct copying from the server or by capturing data transmitted between the server and the serialized devices.

A US patent US7441121 discloses a method of generating a device certificate, comprising forming a template which contains information common to all devices in a product line, and allows devices to self-generate a certificate, utilizing a self individualization process, after the manufacturing process has been completed. Therefore, a device self-generates and stores identification data i.e. serializes itself. Such process involves a security problem, as the serialized device makes its identification data freely available. Moreover, the serialization software stored at the device may be reverse-engineered and copied to unauthorized devices.

It is therefore an object of the present invention to provide a system and a method for secure and efficient serialization of an electronic device.

The object of the invention is a method for secure serialization of a target device by a serialization server, the method comprising the steps of, in the serialization server, reading device primary identification data from the target device, determining serialization data associated with the device primary identification data, generating a target device private key based on the determined device primary identification data, encrypting the serialization data using the target device private key, sending the encrypted serialization data to the target device, whereas in the target device, receiving the encrypted serialization data from the serialization server, generating a target device public key based on the device primary identification data, decrypting the encrypted serialization data using the target device public key.

Preferably, the method further comprises the steps of, in the serialization server, determining serialization data by receiving encrypted data from a data provider server external to the serialization server and decrypting the encrypted data.

Preferably, the method further comprises the steps of, in the target device, generating a device verifying signature of the decrypted serialization data based on the device primary identification data and sending the device verifying signature to the serialization server, whereas in the serialization server, receiving the device verifying signature from the target device, receiving a device reference signature related to the serialization data for the target device from the data provider server, and declaring the serialization as invalid if the device verifying signature is different from the device reference signature.

Preferably, the method further comprises the steps of, in the serialization server, generating a server data signature of the serialization data and appending the server data signature to the serialization data to be encrypted, whereas in the target device, verifying the compliance of the received server data signature with the received serialization data and declaring the serialization data invalid if the verification is negative.

Preferably, the method further comprises the steps of, in the serialization server, reading device secondary identification data from the target device and generating the target device private key based on the determined device primary identification data and device secondary identification data, whereas in the target device, generating the target device public key based on the device primary identification data and device secondary identification data.

Preferably, the device secondary identification data include a target device serial number and/or a target device MAC address.

Preferably, the device primary identification data include a chip identifier of the processor comprised within the target device.

Preferably, the serialization data comprise HDMI keys and/or HDCP keys and/or Conditional Access keys.

The object of the invention is also a computer program comprising program code means for performing all the steps of a method according to the invention when said program is run on a computer, as well as a computer readable medium having computer-executable instructions performing all the steps of the computer-implemented method according to the invention.

Another object of the invention is a system for secure serialization of a target device by a serialization server , the system comprising the serialization server , comprising serialization data selector , configured to read device primary identification data from the target device and determine serialization data associated with the device primary identification data , serialization controller , configured to generate a target device private key based on the determined device primary identification data, encrypt the serialization data using the target device private key and send the encrypted serialization data to the target device , and the system further comprising the target device , comprising primary identification data source configured to provide primary identification data, serialization data collector , configured to receive the encrypted serialization data from the serialization server , generate a target device public key based on the device primary identification data and decrypt the encrypted serialization data using the target device public key.

Preferably, the system further comprises a data provider server , external to the serialization server , storing serialization data associated with device primary identification data .

Preferably, the data provider server further stores device reference signatures associated with device primary identification data .

Preferably, the target device further comprises secondary identification data source , configured to provide secondary identification data, preferably a target device serial number and/or a target device MAC address, wherein the target device public key and the target device private key are generated based on the device primary identification data and device secondary identification data.

Preferably, the device primary identification data source is a processor comprised within the target device, the processor providing its chip identifier.

The invention will be described by way of a preferred embodiment shown on a drawing, in which:
FIG. 1 shows an architecture of the system for secure serialization according to the invention;
FIG. 2 shows steps of the method for secure serialization according to the invention.

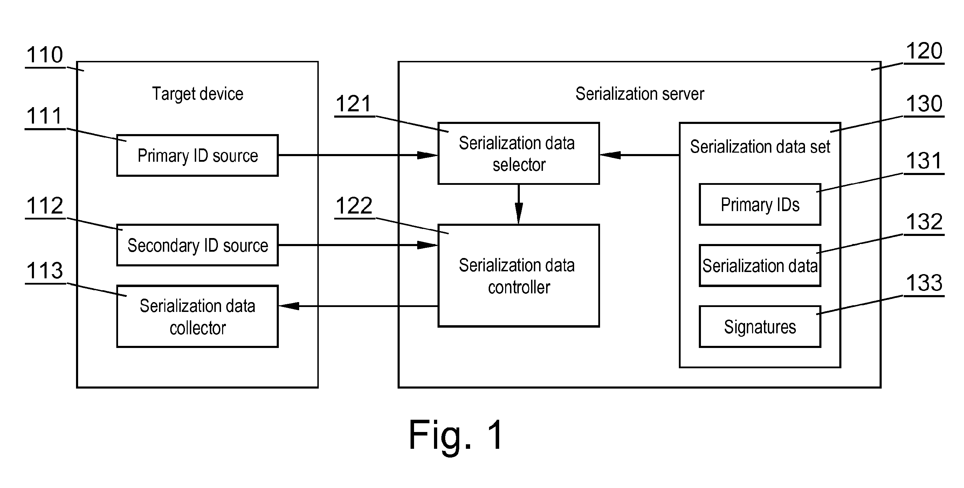

FIG. 1 shows an architecture of the system for secure serialization according to the invention. The system may be set up at the manufacturing site of the devices to be serialized. The system comprises a serialization server 120, which may be physically located at the manufacturing site or accessible via a network connection. In general, the serialization server connects with target devices 110 to be serialized, determines identification data to be stored at the target devices 110 and sends the serialization data in a secure way.

The serialization server comprises a serialization data selector 121, configured to read device primary identification data 131 from the target device 110. The device primary identification 131 data may include unique, secure device identifiers, i.e. identifiers that are not easy to be duplicated to other devices, such as a chip identifier of the processor comprised within the target device. Using the primary identification data 131, the data selector 121 determines serialization data 132 intended for serialization of a given target device 110. The serialization data may comprise various security keys, such as HDMI keys and/or HDCP keys and/or Conditional Access keys. The serialization data may be read from a data provider server 130 external to the serialization server 120, the data provider server 130 storing serialization data 132 associated with device primary identification data 131. The data provider server 130 may be operated by the provider of serialization data and may be physically remote from the serialization server 120 and accessible via a network connection. In order to increase the security of serialization data transmitted from the data provider server 130 to the serialization server 120, the transmitted serialization data 132 may be transmitted in an encrypted form and decrypted at the serialization server.

The serialization server 120 further comprises a serialization controller 122 responsible for secure transmission of serialization data to the target device 110. The serialization controller 122 is configured to generate a target device private key based on the determined device primary identification data, encrypt the serialization data using the target device private key and send the encrypted serialization data to the target device 110. Therefore, serialization data sent to target devices are encrypted by device-unique keys, which makes them accessible only by the device for which they are prepared.

A target device 110, i.e. a device to be serialized, comprises a primary identification data source 111 configured to provide primary identification data. The primary identification data source 111 may be a processor comprised within the target device, the processor providing its chip identifier. The target device 110 further comprises a serialization data collector 113, configured to receive the encrypted serialization data from the serialization server 120, generate a target device public key based on the device primary identification data and decrypt the encrypted serialization data using the target device public key. Therefore, each target device is able to read the serialization data provided for a given target device.

In addition, the data provider server 130 may further store device reference signatures 133 associated with device primary identification data 131. The serialization data collector 113 may be further configured to generate a device verifying signature of the decrypted serialization data based on the device primary identification data and send the device verifying signature to the serialization server. The signature, received by the serialization data controller 122, may be compared with the device reference signature 133 read from the data provider server 130. A positive verification of the signatures indicates that the serialization data were correctly received by appropriate target device. A negative comparison result indicates that the serialization data were received by a device with a different primary identification data than the data associated with the serialization data at the serialization server, i.e. an unauthorized device, and therefore the serialization should be declared as invalid. In case of invalid serialization, the particular target device may be declared as not trusted and data may be stopped to be transmitted to that device.

The target device public key and private key may be generated based on the device primary identification data or a combination of device primary and secondary identification data. The device secondary identification data may comprise non-secure device identifiers, i.e. identifiers that can be relatively easy to change, but are still individually assigned to each device, such as a target device MAC address and/or a target device serial number.

Furthermore, the serialization data controller 122 may be configured to generate a server data signature, for example SHA1 signature, of the serialization data, based on device primary or primary and secondary identification data. The signature can be appended to the serialization data to be encrypted and sent to the target device. The serialization data collector 113 of the target device may be configured to verify the compliance of the received server data signature with the received serialization data. In case the verification is positive, it indicates that the data are correct, i.e. no errors occurred during transmission and secure, i.e. adapted for the particular target device. In case the verification is negative, the serialization data is declared as invalid, with possible consequence of requesting reinitialization of the serialization process.

The modules of the serialization server and the target device may be realized in form of hardware modules with embedded application-specific integrated circuits, providing high level of security. The modules may be also realized in form of software modules, operable by the processing units of the serialization server and of the target device.

The target device may be a personal computer, a personal digital assistant, a cellular telephone, a receivers and decoder of digital television (so-called set-top-box) or any other device requiring secure serialization.

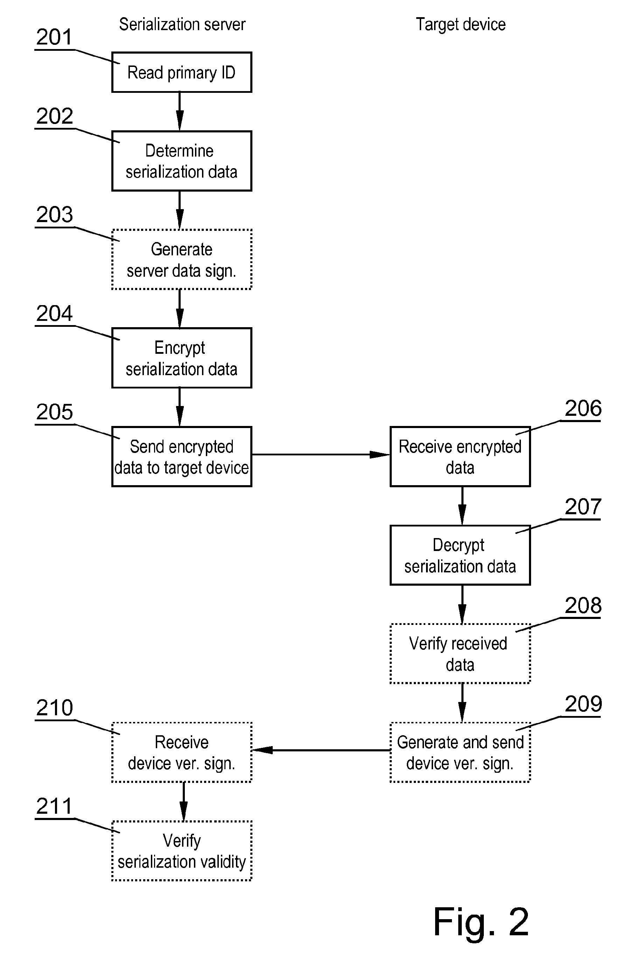

Fig. 2 presents steps of the method for secure serialization according to the invention. In step 201, the serialization data controller 121 of the serialization server 120 reads primary identification data from the target device 110. Next, in step 202 it determines from the serialization data set 130 the serialization data 132 associated with the primary identification data of the currently serialized target device 110. Next, in step 203, a server data signature of the serialization data may be generated and appended to the serialization data. In step 204 the serialization data, possibly with appended server data signature, are encrypted using a target device private key, generated on the basis of the determined device primary identification data. The encrypted serialization data are sent from the serialization server 110 to the currently serialized target device 110 in step 205, and received by the target device in step 206. In step 207 the erialization data collector 113 of the target device 110 decrypts the serialization data using a target device public key generated on the basis of the device primary identification data. The decrypted serialization data may be then stored in the target device 110. In case a server data signature was appended to the serialization data, the signature is verified in step 208 in order to confirm correct and secure data reception. In step 209 the target device 110 may generate a device verifying signature of the decrypted serialization data, based on the device primary identification data and send it to the serialization server 120. The device verifying signature may be received by the serialization server in step 210 and verified with a device reference signature related to the serialization data for the target device from the data provider server 130, in order to verify the correctness and security of the serialization process in step 211.

While the invention presented herein has been depicted, described, and has been defined with reference to particular preferred embodiments, such references and examples of implementation in the foregoing specification do not imply any limitation on the invention. It will, however, be evident that various modifications and changes may be made thereto without departing from the broader scope of the invention. The presented preferred embodiments are exemplary only, and are not exhaustive of the scope of the invention presented herein. Accordingly, the scope of protection is not limited to the preferred embodiments described in the specification, but is only limited by the claims that follow.

## Claims

1. A method for secure serialization of a target device (110) by a serialization server (120), the method comprising the steps of
- in the serialization server (110),
- reading device primary identification data from the target device (110),
- determining serialization data associated with the device primary identification data,
- generating a target device private key based on the determined device primary identification data,
- encrypting the serialization data using the target device private key,
- sending the encrypted serialization data to the target device,
- in the target device (120),
- receiving the encrypted serialization data from the serialization server (120),
- generating a target device public key based on the device primary identification data,
- decrypting the encrypted serialization data using the target device public key.

2. The method according to claim 1, comprising the step of
- in the serialization server (120), determining serialization data by receiving encrypted data from a data provider server (130) external to the serialization server and decrypting the encrypted data.

3. The method according to claim 2, further comprising the step of
- in the target device (110), generating a device verifying signature of the decrypted serialization data based on the device primary identification data and sending the device verifying signature to the serialization server (120),
- in the serialization server (120), receiving the device verifying signature from the target device (110), receiving a device reference signature related to the serialization data for the target device from the data provider server, and declaring the serialization as invalid if the device verifying signature is different from the device reference signature.

4. The method according to any of previous claims, further comprising the steps of
- in the serialization server (120), generating a server data signature of the serialization data and appending the server data signature to the serialization data to be encrypted,
- in the target device (110), verifying the compliance of the received server data signature with the received serialization data and declaring the serialization data invalid if the verification is negative.

5. The method according to any of previous claims, further comprising the step of
- in the serialization server (120), reading device secondary identification data from the target device (110) and generating the target device private key based on the determined device primary identification data and device secondary identification data,
- in the target device (110), generating the target device public key based on the device primary identification data and device secondary identification data.

6. The method according to claim 5, wherein the device secondary identification data include a target device serial number and/or a target device MAC address.

7. The method according to any of previous claims, wherein the device primary identification data include a chip identifier of the processor comprised within the target device.

8. The method according to any of previous claims, wherein the serialization data comprise HDMl keys and/or HDCP keys and/or Conditional Access keys.

9. A computer program comprising program code means for performing all the steps of a method as claimed in any of claims 1 to 8 when said program is run on a computer.

10. A computer readable medium having computer-executable instructions performing all the steps of the computer-implemented method according to any of claims 1 to 8.

11. A system for secure serialization of a target device (110) by a serialization server (120), the system comprising:
- the serialization server (120), comprising
- serialization data selector (121), configured to read device primary identification data from the target device (110) and determine serialization data (132) associated with the device primary identification data (131 ),
- serialization controller (122), configured to generate a target device private key based on the determined device primary identification data, encrypt the serialization data using the target device private key and send the encrypted serialization data to the target device (110),
- the target device (110), comprising
- primary identification data source (111) configured to provide primary identification data,
- serialization data collector (113), configured to receive the encrypted serialization data from the serialization server (120), generate a target device public key based on the device primary identification data and decrypt the encrypted serialization data using the target device public key.

12. The system according to claim 11, further comprising a data provider server (130), external to the serialization server (120), storing serialization data (132) associated with device primary identification data (131).

13. The system according to claim 11, wherein the data provider server (130) further stores device reference signatures (133) associated with device primary identification data (131 ).

14. The system according to claim 11, wherein the target device (110) further comprises secondary identification data source (112), configured to provide secondary identification data, preferably a target device serial number and/or a target device MAC address, wherein the target device public key and the target device private key are generated based on the device primary identification data and device secondary identification data.

15. The system according to any of previous claims, wherein the device primary identification data source (111) is a processor comprised within the target device, the processor providing its chip identifier.
